(19) Europäisches Patentamt / European Patent Office / Office européen des brevets

(11) **EP 3 133 463 A1**

(12) **DEMANDE DE BREVET EUROPEEN**

(43) Date de publication:
**22.02.2017 Bulletin 2017/08**

(51) Int Cl.:
***G05D 23/19*** *(2006.01)*

(21) Numéro de dépôt: **16183446.0**

(22) Date de dépôt: **09.08.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **20.08.2015 BE 201505520**

(71) Demandeur: **Acemal International**
**9678 Nothum (LU)**

(72) Inventeur: **DE LONGRÉE, Pierre**
**9678 Nothum (LU)**

(74) Mandataire: **Lecomte & Partners**
**P.O. Box 1623**
**1016 Luxembourg (LU)**

(54) **CONTRÔLE DE CUISSON DE GAUFRES SUR LA BASE D'UNE MOYENNE MOBILE DE TEMPÉRATURE**

(57) L'invention a trait à un procédé de contrôle de la température de cuisson de produits sur des éléments de cuisson mobiles suivant une trajectoire en boucle fermée, où les éléments de cuisson sont chauffés par une ou plusieurs sources de chaleur communes, les éléments de cuisson mobiles passant devant la ou les sources de chaleur ; la température de chacun des éléments mobiles est mesurée sur une ou plusieurs portions de leur trajectoire; et la puissance de la ou des sources de chaleur est ajustée en fonction d'une moyenne des températures d'au moins une partie des éléments mobiles. L'invention a trait également à une installation configurée pour mettre en oeuvre le procédé en question.

FIG 2

EP 3 133 463 A1

## Description

## Domaine technique

L'invention a trait au domaine de la cuisson à la chaîne de produits, tels que notamment des produits alimentaires à base de pâte. Il peut s'agir notamment de gaufres.

## Technique antérieure

Le document de brevet publié FR 1 037 784 divulgue une installation de production de gaufres, plus précisément une installation de four de cuisson de gaufres. Elle comprend une série de moules à gaufres, constitués, chacun, essentiellement de deux demi-moules pivotants l'un par rapport à l'autre. Ces moules à gaufres sont disposés en série et reliés les uns aux autres par des biellettes munies de galets roulants, de manière à former une boucle fermée. Cette boucle peut être animée et des moyens sont prévus pour ouvrir les moules dans une zone donnée de leur trajectoire en vue d'y déposer des pâtons. Ces moules sont ensuite refermés en vue de former et de cuire les gaufres. A cet effet, chacun des demi-moules comprend une résistance électrique destinée à chauffer ledit demi-moule et cuire la gaufre. Des pistes électriques alimentées en tension s'étendent le long de la trajectoire en boucle des moules et chacun de ceux-ci y est relié électriquement au moyen de contacts glissants du type charbons. Des interrupteurs sont prévus entre les résistances électriques des demi-moules extérieurs et ces contacts glissants. Ces interrupteurs ont pour rôle d'interrompre l'alimentation électrique des demi-moules extérieurs de chaque paire de demi-moules, et ce sur une portion de leur trajectoire, en vue de générer une différence de température entre les demi-moules intérieurs et les demi-moules extérieurs. Pour ce faire, une courroie à bande est disposée parallèlement à l'installation et comprend, sur une portion donnée, une surépaisseur destinée à coopérer avec les interrupteurs en vue d'interrompre l'alimentation électrique. Un régulateur régule la puissance électrique alimentant les résistances des moules. Cette installation permet de générer une différence de température au sein des moules tout en conservant une alimentation électrique générale commune et en utilisant des résistances électriques identiques. Cette installation est spécifiquement conçue pour des moules équipés de résistances électriques. Une telle construction impose l'utilisation de contacts glissants sur des pistes électriques, ce qui augmente le coût de fabrication et d'entretien et peut par ailleurs conduire à des défaillances par mauvais contact, voire défaut de contact électrique. De plus, cet enseignement ne précise pas de quelle manière la puissance est régulée afin d'atteindre les températures de cuisson voulues.

Le document de brevet publié US 2004/0022298 A1 divulgue un procédé de contrôle de température de produits alimentaires passant par un four de cuisson sur un convoyeur. Le problème technique abordé par ce document est de s'assurer que chacun des produits en question soit suffisamment cuit, en particulier pour des raisons sanitaires. Les produits peuvent notamment être à base de viande, notamment de volaille. Pour ce faire, le procédé prévoit notamment de procéder à la mesure de plusieurs produits à la sortie du four et faire une moyenne de ces températures en vue d'ajuster la puissance du four. Cet enseignement reste éloigné de la problématique du document précédent, à savoir de contrôler la cuisson de produits dans des moules individuels.

## Résumé de l'invention

<u>Problème technique</u>

L'invention a pour objectif de proposer une solution efficace et économique à la régulation de la température de cuisson de produits cuits au moyen d'éléments de cuisson individuels.

<u>Solution technique</u>

L'invention a pour objet un procédé de contrôle de la température de cuisson de produits sur des éléments de cuisson mobiles suivant une trajectoire en boucle fermée ; remarquable en ce que les éléments de cuisson sont chauffés par une ou plusieurs sources de chaleur communes, les éléments de cuisson mobiles suivant leur trajectoire passant devant la ou les sources de chaleur ; la température de chacun des éléments mobiles est mesurée sur une ou plusieurs portions de leur trajectoire ; et la puissance de la ou des sources de chaleur est ajustée en fonction d'une moyenne des températures d'au moins une partie des éléments mobiles.

Lorsqu'il y a plusieurs sources de chaleur pour les éléments mobiles d'une trajectoire, la puissance de celles-ci peut être ajustée de manière individuelle ou, alternativement, de manière commune.

Les produits à cuire peuvent être des produits alimentaires, notamment à base de pâte, tels que des gaufres, ou encore des produits non alimentaires comme notamment des produits en céramique.

Les éléments de cuisson peuvent avantageusement être des moules destinés à donner aux produits leur forme finale.

Selon un mode avantageux de l'invention, la température de chacun des éléments mobiles est mesurée par un ou plusieurs capteurs de température fixes sur la ou les portions de la trajectoire.

Selon un mode avantageux de l'invention, la température de chacun des éléments mobiles est mesurée sans contact avec lesdits éléments, préférentiellement par infrarouge.

Selon un mode avantageux de l'invention, la ou les sources de chaleur sont stationnaires.

Selon un mode avantageux de l'invention, la ou les sources de chaleur comprennent des brûleurs à gaz et/ou des résistances électriques radiantes.

Selon un mode avantageux de l'invention, les éléments de cuisson mobiles sont fixés à un convoyeur formant la trajectoire fermée.

Selon un mode avantageux de l'invention, le convoyeur comprend un plateau et une ou plusieurs chaînes décrivant la trajectoire fermée autour du plateau et à laquelle ou auxquelles les éléments de cuisson sont fixés.

Selon un mode avantageux de l'invention, la moyenne des températures en fonction de laquelle la puissance de la ou des sources de chaleur est ajustée est une moyenne des températures de la totalité des éléments de cuisson du convoyeur.

Selon un mode avantageux de l'invention, la moyenne des températures en fonction de laquelle la puissance de la ou des sources de chaleur est ajustée est une moyenne mobile, préférentiellement arithmétique, actualisée au fur et à mesure du déplacement des éléments de cuisson.

Selon un mode avantageux de l'invention, la moyenne mobile est actualisée en remplaçant la valeur de température de chacun des éléments de cuisson par une nouvelle valeur mesurée lorsque ledit élément arrive sur la ou les portions de la trajectoire où la mesure a lieu.

Selon un mode avantageux de l'invention, la puissance de la ou des sources de chaleur est régulée en boucle fermée sur base de la moyenne des températures des éléments mobiles, ladite régulation étant du type proportionnelle, intégrale et/ou dérivée.

Selon un mode avantageux de l'invention, la trajectoire comprend une portion de cuisson des produits dans les éléments de cuisson, la ou une des portions de la trajectoire où la température des éléments de cuisson est mesurée est située au début ou en amont de la portion de cuisson.

Selon un mode avantageux de l'invention, les produits sont alimentaires à base de pâte et les éléments de cuisson comprennent des premiers demi-moules mobiles suivant une première trajectoire en boucle fermée et des deuxièmes demi-moules mobiles suivant une deuxième trajectoire en boucle fermée, lesdites trajectoires étant configurées pour que des premiers demi-moules entrent en contact, respectivement, avec des deuxièmes demi-moules en vue de former et cuire les produits.

Selon un mode avantageux de l'invention, les sources de chaleur comprennent au moins une première source configurée pour chauffer les premiers demi-moules mobiles et au moins une deuxième source configurée pour chauffer les deuxièmes demi-moules mobiles, la puissance de la ou des premières sources étant ajustée en fonction de la moyenne des températures des premiers demi-moules, et la puissance de la ou des deuxièmes sources étant ajustée en fonction de la moyenne des températures des deuxièmes demi-moules.

L'invention a également pour objet une installation de cuisson de produits, préférentiellement alimentaires à base de pâte, comprenant : au moins un convoyeur avec des éléments de cuisson mobiles suivant une trajectoire fermée ; au moins une source de chaleur des éléments de cuisson ; un dispositif de mesure de température des éléments de cuisson ; une unité de contrôle de la puissance de la ou des sources de chaleur ; remarquable en ce que la ou les sources de chaleur sont communes aux éléments de cuisson, et disposées de manière à ce que les éléments de cuisson mobiles suivant leur trajectoire passent devant ladite ou lesdites sources ; l'unité de contrôle est configurée pour mettre en oeuvre le procédé selon l'invention.

Avantages de l'invention

Les mesures de l'invention sont intéressantes en ce qu'elles permettent d'ajuster de manière efficace et stable le processus de cuisson des produits sans requérir à des mesures de température individuelles et embarquées sur les éléments de cuisson.

**Brève description des dessins**

La figure 1 est une représentation en coupe d'un moule à gaufre constitué de deux demi-moules et utilisé dans une installation et un procédé conformes à l'invention ;
La figure 2 est une représentation schématique d'installation de cuisson de gaufres, conforme à l'invention ;
La figure 3 est un logigramme d'un procédé de contrôle de la température de cuisson de gaufres, conforme à l'invention.

Description d'un mode de réalisation

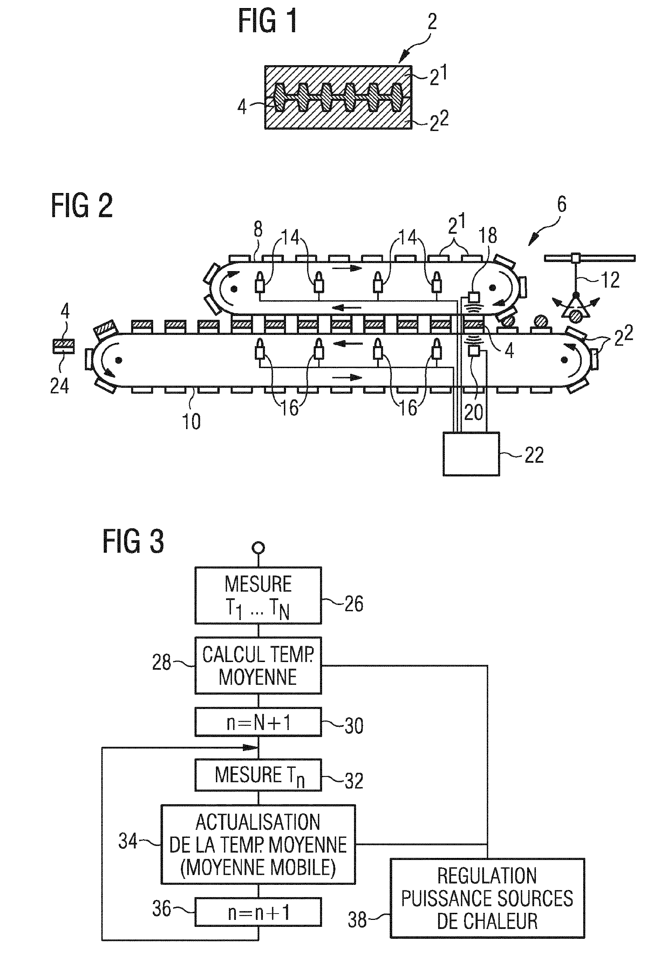

La figure 1 est une vue en coupe schématique d'un moule à gaufre destiné à être utilisé en nombre dans une installation de cuisson de gaufres. Le moule 2 est constitué essentiellement de deux demi-moules $2^1$ et $2^2$ destinés à être disposés l'un contre l'autre en vue de former et de cuire la gaufre 4 à partir d'un pâton. Un pâton est un morceau de pâte, notamment de pâte destinée à la réalisation d'un produit de pâtisserie tel qu'une gaufre. Les demi-moules $2^1$ et $2^2$ sont avantageusement réalisés en métal, préférentiellement en fonte, et sont destinés à être chauffés en vue de cuire la gaufre formée par l'écrasement du pâton par les demi-moules.

La figure 2 est une illustration de principe d'une installation industrielle de cuisson de produits tels que des gaufres. L'installation 6 comporte, essentiellement deux convoyeurs 8 et 10, dont l'un est disposé au-dessus de l'autre. Chacun des convoyeurs 8 et 10 comprend une ou plusieurs chaînes formant une boucle fermée s'étendant suivant une direction longitudinale, cette dernière étant préférentiellement horizontale. Des demi-moules $2^1$ tels qu'illustrés à la figure 1 sont fixés aux chaînes du convoyeur du haut 8, et des demi-moules $2^2$ tels qu'illustrés à la figure 1 sont fixés aux chaînes du convoyeur du bas 10. Les demi-moules $2^1$ et $2^2$ décrivent ainsi des trajectoires en boucle fermée, respectivement.

Ces convoyeurs sont configurés pour fonctionner de manière synchronisée, de sorte à ce que chacun des demi-moules supérieurs $2^1$ vienne épouser un demi-moule inférieur $2^2$ après qu'un pâton soit déposé, par exemple par une pince 12, sur le demi-moule inférieur $2^2$ en question.

Des sources de chaleur 14 et 16, comme par exemple du type brûleurs à gaz, sont disposés sous les demi-moules supérieurs $2^1$ et inférieurs $2^2$ en vue d'apporter la chaleur nécessaire à la cuisson. En l'occurrence, les brûleurs 14 sont disposés en amont de la portion de trajectoire où les demi-moules $2^1$ et $2^2$ sont en contact mutuel, cette portion correspondant à la cuisson des gaufres. Cela signifie que les demi-moules supérieurs $2^1$ sont préchauffés, c'est-à-dire chauffés avant le processus de cuisson.

Les brûleurs 16 sont quant à eux disposés sous les demi-moules inférieurs $2^2$, le long de la portion de leur trajectoire correspondant à la cuisson des gaufres. Lors du rapprochement d'un demi-moule supérieur $2^1$ d'un demi-moule inférieur $2^2$, le pâton se voit écrasé par le rapprochement des demi-moules et commence à cuire au contact du demi-moule supérieur $2^1$ préalablement chauffé. Ensuite, le demi-moule inférieur $2^2$ est chauffé par les brûleurs 16, ce qui permet de continuer la cuisson de la gaufre de manière progressive par apport de chaleur au niveau du demi-moule inférieur. Les demi-moules supérieurs $2^1$ et inférieurs $2^2$ se refroidissent après avoir quitté la portion de trajectoire comprenant les brûleurs 16. Les demi-moules supérieurs $2^1$ se séparent des demi-moules inférieurs $2^2$ pour rejoindre les brûleurs 14. Les demi-moules inférieurs $2^2$ quant à eux continuent à évoluer le long du convoyeur 10 en supportant seuls les gaufres ainsi fraîchement cuites. Ces dernières peuvent alors refroidir un peu avant d'être évacuées, par exemple via une goulotte ou un convoyeur auxiliaire 24. Les demi-moules inférieurs $2^2$ évoluent alors le long du côté inférieur du convoyeur 10, sans apport de chaleur. Ils se refroidissent alors jusqu'à recevoir à nouveau des pâtons et subir un chauffage par les brûleurs 16.

Des capteurs de température 18 et 20 des demi-moules supérieurs $2^1$ et inférieurs $2^2$, respectivement, sont disposés en amont de la portion de trajectoire correspondant à la cuisson des gaufres. Il peut s'agir de capteurs infrarouge aptes à mesurer la température des demi-moules sans contact direct. Les capteurs sont avantageusement stationnaires, si bien que lorsque les convoyeurs sont en mouvement, ils mesurent successivement les températures des différents demi-moules à un endroit précis.

L'installation 6 comprend une unité de contrôle 22 configurée pour contrôler la puissance de chauffe des sources de chaleur 14 et 16. L'unité de contrôle est configurée pour ajuster la puissance des sources de chaleurs 14 et 16 en fonction d'une moyenne mobile des températures des demi-moules obtenues par les capteurs 18 et 20.

Une moyenne mobile, ou moyenne glissante, est un type de moyenne statistique utilisé pour analyser des séries ordonnées de données, le plus souvent des séries temporelles, en supprimant les fluctuations transitoires de façon à en souligner les tendances à plus long terme. Cette moyenne est dite mobile parce qu'elle est recalculée de façon continue, en utilisant à chaque calcul un sous-ensemble d'éléments dans lequel un nouvel élément remplace le plus ancien ou s'ajoute au sous-ensemble.

En l'occurrence, le sous-ensemble d'éléments, ou échantillonnage, est avantageusement la totalité des demi-moules inférieurs ou supérieurs. Il peut également être une fraction de la totalité des demi-moules inférieurs ou supérieurs.

Pour chacun des convoyeurs supérieur et inférieur, la moyenne mobile arithmétique de la température des demi-moules correspondants peut être calculée comme suit :

$$\bar{T}_n = \frac{1}{N} \sum_{k=n-N+1}^{N} T_k$$

où N est le nombre de demi-moules considérés, c'est-à-dire l'échantillonnage, pour le calcul de la moyenne ; n correspond à l'indice temporel, n étant supérieur ou égal à N puisqu'il faut initialement mesurer successivement les températures des N demi-moules avant de pouvoir calculer ; et $T_k$ est la température mesurée au temps $k$,

Dès que les températures $T_1...T_N$ des $N$ demi-moules ont été mesurées, la moyenne $T_N$ est alors calculée sur base de ces valeurs. Dès que la température $T_{N+1}$ est mesurée, la moyenne $T_N$ est alors actualisée en étant basée sur les N valeurs de températures $T_2...T_{N+1}$, et ainsi de suite. La moyenne peut par ailleurs être actualisée comme suit :

$$\bar{T}_{n+1} = \bar{T}_n + \frac{T_{n+1} - T_{n+1-N}}{N}$$

Cette moyenne peut être avantageusement calculée séparément pour chaque convoyeur 8 et 10 et les brûleurs 14 et 16 de ces convoyeurs peuvent être contrôlés sur base de ces moyennes mobiles, respectivement.

La puissance des sources de chaleur est avantageusement ajustée au moyen d'une boucle fermée de régulation du type PID (proportionnel/ intégral/dérivé) dont la grandeur physique est la moyenne mobile de température. En l'occurrence, l'unité de contrôle peut comprendre un ou plusieurs microcontrôleurs ou un automate programmable contenant un ou plusieurs microcontrôleurs, le ou les microcontrôleurs étant chargés avec des instructions configurées pour mettre en oeuvre le procédé qui vient d'être décrit.

Le procédé qui vient d'être décrit est illustré au logigramme de la figure 3. Une première étape 26 consiste à mesurer les N valeurs de température de *N* demi-moules différents. Une première moyenne de température de ces *N* premières valeurs est alors calculée à l'étape 28. Aux étapes 30, 32, 34 et 36, pour chaque nouvelle mesure $T_n$ où $n{\geq}N+1,$ la moyenne de température est actualisée. A l'étape 38, la moyenne de température sert de grandeur physique de régulation de la puissance des sources de chaleur.

La moyenne mobile ou glissante qui a été décrite ci-avant est une moyenne arithmétique, il est toutefois entendu qu'il est envisageable de prévoir une moyenne pondérée.

Dans l'exemple de réalisation de l'invention qui vient d'être décrit, l'installation de cuisson et le procédé de contrôle de la puissance des sources de chaleur de ladite installation ont trait à la cuisson de gaufres. Il est toutefois entendu que l'invention est également applicable à la cuisson de produits alimentaires en général, ainsi que de produits non alimentaires, ces produits étant alors cuits sur des éléments de cuisson individuels.

Dans l'exemple de réalisation de l'invention qui vient d'être décrit, l'installation de cuisson et le procédé de contrôle de la puissance des sources de chaleur de ladite installation prévoient des convoyeurs avec des trajectoires des éléments de cuisson, en l'occurrence les demi-moules, correspondant à celles de tapis roulants. Il est toutefois entendu que la ou les trajectoires peuvent être différentes. Elle(s) peut/peuvent notamment être dans un plan généralement horizontal, en forme de cercle ou de boucle, à la manière d'un carrousel.

Dans l'exemple de réalisation de l'invention qui vient d'être décrit, l'installation de cuisson et le procédé de contrôle de la puissance des sources de chaleur de ladite installation prévoient des capteurs de température fixes et des sources de chaleurs fixes. Il est toutefois entendu que les mesures de température et/ou les sources de chaleur peuvent être mobiles, c'est-à-dire embarquées sur les éléments de cuisson ou, par exemple, mobiles sur une course donnée pour suivre le mouvement desdits éléments.

## Revendications

**1.** Procédé de contrôle de la température de cuisson de produits (4) sur des éléments de cuisson ($2^1$, $2^2$) mobiles suivant une trajectoire en boucle fermée ; **caractérisé en ce que**

- les éléments de cuisson ($2^1$, $2^2$) sont chauffés par une ou plusieurs sources de chaleur communes (14, 16), les éléments de cuisson mobiles suivant leur trajectoire passant devant la ou les sources de chaleur ;
- la température de chacun des éléments mobiles ($2^1$, $2^2$) est mesurée sur une ou plusieurs portions de leur trajectoire ; et
- la puissance de la ou des sources de chaleur (14, 16) est ajustée en fonction d'un moyenne des températures d'au moins une partie des éléments mobiles ($2^1$, $2^2$).

**2.** Procédé selon la revendication 1, **caractérisé en ce que** la température de chacun des éléments mobiles ($2^1$, $2^2$) est mesurée par un ou plusieurs capteurs de température (18, 20) fixes sur la ou les portions de la trajectoire.

**3.** Procédé selon l'une des revendications 1 et 2, **caractérisé en ce que** la température de chacun des éléments mobiles ($2^1$, $2^2$) est mesurée sans contact avec lesdits éléments, préférentiellement par infrarouge.

**4.** Procédé selon l'une des revendications 1 à 3, **caractérisé en ce que** la ou les sources de chaleur (14, 16) sont stationnaires.

**5.** Procédé selon l'une des revendications 1 à 4, **caractérisé en ce que** la ou les sources de chaleur comprennent des brûleurs à gaz (14, 16) et/ou des résistances électriques radiantes.

**6.** Procédé selon l'une des revendications 1 à 5, **caractérisé en ce que** les éléments de cuisson mobiles ($2^1$, $2^2$) sont fixés à un convoyeur (8, 10) formant la trajectoire en boucle fermée.

**7.** Procédé selon la revendication 6, **caractérisé en ce que** le convoyeur (8, 10) comprend un plateau et une ou plusieurs chaînes décrivant la trajectoire fermée autour du plateau et à laquelle ou auxquelles les éléments de cuisson ($2^1$, $2^2$) sont fixés.

**8.** Procédé selon l'une des revendications 6 et 7, **caractérisé en ce que** la moyenne des températures en fonction de laquelle la puissance de la ou des sources de chaleur (14, 16) est ajustée est une moyenne des températures de la totalité des éléments de cuisson ($2^1$, $2^2$) du convoyeur (8, 10).

**9.** Procédé selon l'une des revendications 1 à 8, **caractérisé en ce que** la moyenne des températures en fonction de laquelle la puissance de la ou des sources de chaleur (14, 16) est ajustée est une moyenne mobile, préférentiellement arithmétique, actualisée au fur et à mesure du déplacement des

éléments de cuisson ($2^1$, $2^2$).

10. Procédé selon la revendication 9, **caractérisé en ce que** la moyenne mobile est actualisée en remplaçant la valeur de température de chacun des éléments de cuisson ($2^1$, $2^2$) par une nouvelle valeur mesurée lorsque ledit élément ($2^1$, $2^2$) arrive sur la ou les portions de la trajectoire où la mesure a lieu.

11. Procédé selon l'une des revendications 1 à 10, **caractérisé en ce que** la puissance de la ou des sources de chaleur (14, 16) est régulée en boucle fermée sur base de la moyenne des températures des éléments mobiles, ladite régulation étant du type proportionnelle, intégrale et/ou dérivée.

12. Procédé selon l'une des revendications 1 à 11, **caractérisé en ce que** la trajectoire comprend une portion de cuisson des produits dans les éléments de cuisson, la ou une des portions de la trajectoire où la température des éléments de cuisson est mesurée est située au début ou en amont de la portion de cuisson.

13. Procédé selon l'une des revendications 1 à 12, **caractérisé en ce que** les produits (4) sont alimentaires à base de pâte et les éléments de cuisson comprennent des premiers demi-moules mobiles ($2^1$) suivant une première trajectoire en boucle fermée et des deuxièmes demi-moules mobiles ($2^2$) suivant une deuxième trajectoire en boucle fermée, lesdites trajectoires étant configurées pour que des premiers demi-moules ($2^1$) entrent en contact, respectivement, avec des deuxièmes demi-moules ($2^2$) en vue de former et cuire les produits (4).

14. Procédé selon la revendication 13, **caractérisé en ce que** les sources de chaleur comprennent au moins une première source (14) configurée pour chauffer les premiers demi-moules mobiles ($2^1$) et au moins une deuxième source (16) configurée pour chauffer les deuxièmes demi-moules mobiles ($2^2$), la puissance de la ou des premières sources (14) étant ajustée en fonction de la moyenne des températures des premiers demi-moules ($2^1$), et la puissance de la ou des deuxièmes sources (16) étant ajustée en fonction de la moyenne des températures des deuxièmes demi-moules ($2^2$).

15. Installation (6) de cuisson de produits (4), préférentiellement alimentaires à base de pâte, comprenant :

   - au moins un convoyeur (8, 10) avec des éléments de cuisson ($2^1$, $2^2$) mobiles suivant une trajectoire fermée ;
   - au moins une source de chaleur (14, 16) des éléments de cuisson ($2^1$, $2^2$) ;
   - un dispositif de mesure de température (18, 20) des éléments de cuisson ($2^1$, $2^2$);
   - une unité de contrôle (22) de la puissance de la ou des sources de chaleur (14, 16) ;

**caractérisé en ce que** :

   - la ou les sources de chaleur (14, 16) sont communes aux éléments de cuisson ($2^1$, $2^2$), et disposées de manière à ce que les éléments de cuisson ($2^1$, $2^2$) mobiles suivant leur trajectoire passent devant ladite ou lesdites sources (14, 16) ;
   - l'unité de contrôle (22) est configurée pour mettre en oeuvre le procédé selon l'une des revendications 1 à 14.

## FIG 1

$2^1$
4
$2^2$
2

## FIG 2

8  14  14  $2^1$  18  6
12
4
24
10  16  16  20  $2^2$  4
22

## FIG 3

MESURE
$T_1 ... T_N$ — 26

28 — CALCUL TEMP.
MOYENNE

$n = N+1$ — 30

MESURE $T_n$ — 32

34 — ACTUALISATION
DE LA TEMP. MOYENNE
(MOYENNE MOBILE)

36 — $n = n+1$

REGULATION
PUISSANCE SOURCES
DE CHALEUR

38 —

**EP 3 133 463 A1**

Europäisches Patentamt

European Patent Office

Office européen des brevets

# RAPPORT DE RECHERCHE EUROPEENNE

Numéro de la demande

EP 16 18 3446

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 1 520 474 A1 (SHIN NIPPON KIKAI KOGYO KK [JP]) 6 avril 2005 (2005-04-06) <br> * abrégé; revendications 1,4; figures 2-3 * <br> * alinéas [0038], [0044], [0052] - [0054] * | 1-11,13, 15 | INV. G05D23/19 |
| Y | GB 930 884 A (CHARLES WILLIAM FORRESTER) 10 juillet 1963 (1963-07-10) <br> * revendications 1,2,12; figures 1A, 4 * | 13 | |
| Y,D | US 2004/022298 A1 (GUNAWARDENA RAMESH [US] ET AL) 5 février 2004 (2004-02-05) <br> * alinéas [0036] - [0037]; revendications 28,29,34,36; figure 1 * | 1-11,15 | |
| A | JP 2012 000033 A (SHIKISHIMA BAKING CO LTD; TANAKA TOSHIMASA) 5 janvier 2012 (2012-01-05) <br> * alinéas [0014], [0022], [0026], [0028], [0033], [0041]; revendications 1,3,5; figures 1-4 * | 1-15 | |

DOMAINES TECHNIQUES RECHERCHES (IPC)

G05D
A21B

Le présent rapport a été établi pour toutes les revendications

| Lieu de la recherche | Date d'achèvement de la recherche | Examinateur |
|---|---|---|
| Munich | 10 janvier 2017 | Mallet, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 18 3446

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-01-2017

| Document brevet cité au rapport de recherche | | Date de publication | Membre(s) de la famille de brevet(s) | | Date de publication |
|---|---|---|---|---|---|
| EP 1520474 | A1 | 06-04-2005 | AT | 503386 T | 15-04-2011 |
| | | | EP | 1520474 A1 | 06-04-2005 |
| | | | EP | 1759585 A2 | 07-03-2007 |
| | | | ES | 2361850 T3 | 22-06-2011 |
| GB 930884 | A | 10-07-1963 | AUCUN | | |
| US 2004022298 | A1 | 05-02-2004 | AU | 2002317536 A1 | 26-02-2004 |
| | | | BR | 0205306 A | 20-07-2004 |
| | | | CA | 2413962 A1 | 05-02-2004 |
| | | | US | 2004022298 A1 | 05-02-2004 |
| JP 2012000033 | A | 05-01-2012 | JP | 5566197 B2 | 06-08-2014 |
| | | | JP | 2012000033 A | 05-01-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1037784

- US 20040022298 A1